# EUROPEAN PATENT APPLICATION

(11) **EP 4 607 979 A1**
(43) Date of publication of application: **27.08.2025**
(21) Application number: 23886266.8
(22) Date of filing: 01.11.2023
(51) Int. Cl.: H04W 8/02, H04W 76/11, H04W 8/20, H04W 84/04, H04L 67/289

(54) **METHOD AND APPARATUS FOR MANAGING BINDING INFORMATION REGARDING USER EQUIPMENT IN WIRELESS COMMUNICATION SYSTEM**

(30) Priority: 03.11.2022 KR 20220145577
(71) Applicant: Samsung Electronics Co., Ltd., Suwon-si, Gyeonggi-do 16677 (KR)
(72) Inventor: KIM, Hyesung, Suwon-si Gyeonggi-do 16677 (KR); PARK, Jungshin, Suwon-si Gyeonggi-do 16677 (KR); SUH, Dongeun, Suwon-si Gyeonggi-do 16677 (KR); LEE, Jicheol, Suwon-si Gyeonggi-do 16677 (KR)
(74) Representative: Nederlandsch Octrooibureau
(86) International application number: PCT/KR2023/017260
(87) International publication number: WO 2024/096570

(57) **Abstract**

The present disclosure relates to a 5G or 6G communication system for supporting a higher data transmission rate. Disclosed is a method by which a home-policy control function (H-PCF) manages binding information regarding a roaming UE in a wireless communication system. The method comprises the steps of: performing a session management policy association procedure for the UE with a home-session management function (H-SMF) that has received a protocol data unit (PDU) session creation request for the UE from a visited-session management function (V-SMF); generating binding information regarding the LTE; and transmitting, to a home binding support function (H-BSF), a message for registering the generated binding information.

## Description

### Technical Field

The disclosure relates to a wireless communication system. More specifically, the disclosure proposes a method for providing an identifier and session information for a roaming terminal in a mobile communication system.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### Detailed Description of the Invention

### Technical Problem

In order to process a request for an identifier or session information for a roaming terminal in a visited public land mobile network (PLMN) (VPLMN), information about an SMF that manages the session of the roaming terminal should be obtained, or binding information obtained by combining the identifier and session information for the roaming terminal should be obtained. However, since the corresponding information is not stored in the network functions in the VPLMN, such as V-UDM or V-BSF, it is not possible to obtain information about the SMF that manages the session of the roaming terminal or to obtain binding information. In order to solve this problem, it is necessary to define a method for storing and managing information about the SMF that manages the session of the terminal in the VPLMN and binding information, or a method for processing relevant requests in the VPLMN in conjunction with the network functions of a home PLMN (HPLMN).

### Technical Solution

According to an embodiment of the disclosure, a method for managing binding information about a roaming terminal by a home-policy control function (H-PCF) in a wireless communication system is disclosed. The method includes performing a session management policy association procedure for a terminal with a home-session management function (H-SMF) which received a request to create a protocol data unit (PDU) session for the terminal from a visited-session management function (V-SMF), generating binding information about the terminal, and transmitting, to a home binding support function (H-BSF), a message for registering the generated binding information.

According to an embodiment of the disclosure, a method for managing binding information about a roaming terminal by a visited-session management function (V-SMF) in a wireless communication system is disclosed. The method includes receiving a request to create a PDU session for a terminal from an access and mobility function (AMF), obtaining subscriber information about the terminal from a unified data management (UDM), performing a session management policy association procedure for the terminal with a visited-policy control function (V-PCF), the V-PCF registering binding information about the terminal in a visited-binding support function (V-BSF), and transmitting a PDU session creation accept message to the terminal through the AMF.

According to an embodiment of the disclosure, a method for obtaining context of a terminal by a visited-application function (V-AF) in a wireless communication system is disclosed. The method includes requesting context of the terminal from a unified data management (UDM) in a visited public land mobile network (VPLMN), and receiving, from the UDM in the VPLMN, the context of the terminal obtained by the UDM in the VPLMN from a home-UDM (H-UDM).

According to an embodiment of the disclosure, a method for obtaining context of a terminal by a visited-application function (V-AF) in a wireless communication system is disclosed. The method includes requesting context of the terminal from a unified data management (UDM) in a visited public land mobile network (VPLMN), receiving, in response to the requesting, information about a home-unified data management (H-UDM) that stores subscriber information about the terminal from the UDM in the VPLMN, requesting the context of the terminal to the H-UDM, and receiving the context of the terminal from the H-UDM.

According to an embodiment of the disclosure, an electronic device for a home-policy control function (H-PCF) in a wireless communication system is disclosed. The electronic device includes a transceiver, and a controller connected to the transceiver. The controller is configured to perform a session management policy association procedure for a terminal with a home-session management function (H-SMF) which received a request to create a protocol data unit (PDU) session for the terminal from a visited-session management function (V-SMF), generate binding information about the terminal, and transmit, to a home binding support function (H-BSF), a message for registering the generated binding information.

According to an embodiment of the disclosure, an electronic device for a visited-session management function (V-SMF) in a wireless communication system is disclosed. The electronic device includes a transceiver, and a controller connected to the transceiver. The controller is configured to receive a request to create a PDU session for a terminal from an access and mobility function (AMF), obtain subscriber information for the terminal from a unified data management (UDM), perform a session management policy association procedure for the terminal with a visited-policy control function (V-PCF), the V-PCF registering binding information about the terminal in a visited-binding support function (V-BSF), and transmit a PDU session creation accept message to the terminal through the AMF.

According to an embodiment of the disclosure, an electronic device for a visited-application function (V-AF) in a wireless communication system is disclosed. The electronic device includes a transceiver, and a controller connected to the transceiver. The controller is configured to request context of the terminal from a unified data management (UDM) in a visited public land mobile network (VPLMN), and receive, from the UDM in the VPLMN, the context of the terminal obtained by the UDM in the VPLMN from a home-UDM (H-UDM).

According to an embodiment of the disclosure, an electronic device for a visited-application function (V-AF) in a wireless communication system is disclosed. The electronic device includes a transceiver, and a controller connected to the transceiver. The controller is configured to transmit a request for context of the terminal to a unified data management (UDM) in a visited public land mobile network (VPLMN), receive, in response to the request, information about home-unified data management (H-UDM) that stores subscriber information for the terminal from the UDM in the VPLMN, request the context of the terminal to the H-UDM, and receive the context of the terminal from the H-UDM.

### Advantageous Effects

According to an embodiment of the disclosure, it is possible to provide identifier information for a roaming terminal to an external application function, and it is possible to enable the application function to use a network capability exposure service for the roaming terminal.

According to an embodiment of the disclosure, an application function (AF) that provides information collected by a terminal to a network data analytics function (NWDAF) can combine and associate the information collected by the terminal and a NWDAF request with a terminal identifier and session information.

### Brief Description of Drawings

FIG. 1 illustrates the structure of a 5G system according to an embodiment of the disclosure.
FIG. 2 illustrates a method of generating binding information about a home-routed roaming UE according to an embodiment of the disclosure.
FIG. 3 illustrates a method of generating binding information about a local breakout (LBO) roaming UE according to an embodiment of the disclosure.
FIG. 4 illustrates a method of obtaining session information for a roaming UE according to an embodiment of the disclosure.
FIG. 5 illustrates a method of obtaining session information for a roaming UE according to an embodiment of the disclosure.
FIG. 6 illustrates a block diagram of an electronic device according to an embodiment of the disclosure.
FIG. 7 illustrates a method of obtaining session information for a roaming UE according to an embodiment of the disclosure.
FIG. 8 illustrates a method of obtaining session information for a roaming UE according to an embodiment of the disclosure.

### Mode for Carrying out the Invention

Hereinafter, the operation principle of exemplary embodiments of the disclosure will be described in detail with reference to the accompanying drawings. The same or like elements illustrated in the drawings are designated by the same or like reference numerals as much as possible even though they are illustrated in different drawings. In the following description of the disclosure, detailed descriptions of known functions or configurations incorporated herein will be omitted when it is determined that the descriptions may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Various changes and modifications may be made to the disclosure, and the disclosure may various embodiments, but particular embodiments illustrated in the drawings will be described in detail. However, it should be appreciated that they are not intended to limit the disclosure to particular embodiments and the disclosure include various changes, equivalents, or alternatives falling within the sprit and scope of the disclosure.

As used here in, it will be understood that the singular expressions "a", "an", and "the" include plural expressions unless the context clearly indicates otherwise.

As used herein, the terms including an ordinal number, such as expressions "a first" and "a second", may be used to described various elements, but the corresponding elements should not be limited by such terms. The above terms are used merely for the purpose of distinguishing one element from other elements. For example, a first element may be termed a second element, and similarly, a second element may be termed a first element without departing from the scope of protection of the disclosure. The term "and/or" includes a combination or any one of a plurality of relevant items enumerated.

The terms as used herein are used merely to describe specific embodiments and are not intended to limit the disclosure. A singular expression may include a plural expression unless they are definitely different in a context. As used herein, the expression "include" or "have" are intended to specify the existence of mentioned features, numbers, steps, operations, elements, components, or combinations thereof, and should be construed as not precluding the possible existence or addition of one or more other features, numbers, steps, operations, elements, components, or combinations thereof.

As used in embodiments of the disclosure, unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in embodiments of the disclosure.

Hereinafter, the operation principle of the disclosure will be described in detail in conjunction with the accompanying drawings. The terms which will be described below are terms defined in consideration of the functions in the disclosure. They may be different according to users, intentions of the users, or customs, and therefore, the definitions of the terms should be made based on the contents throughout the specification.

As used herein, the terms referring to network functions or network entities, terms referring to messages, terms referring to identification information, and the like are illustratively used for the sake of descriptive convenience. Therefore, the disclosure is not limited by the terms as described below, and other terms referring to subjects having equivalent technical meanings may also be used.

In the following description, terms and names defined in the 5G system standards will be used for the sake of convenience, but the disclosure is not limited by these terms and names and may be applied in the same way to systems that conform other standards.

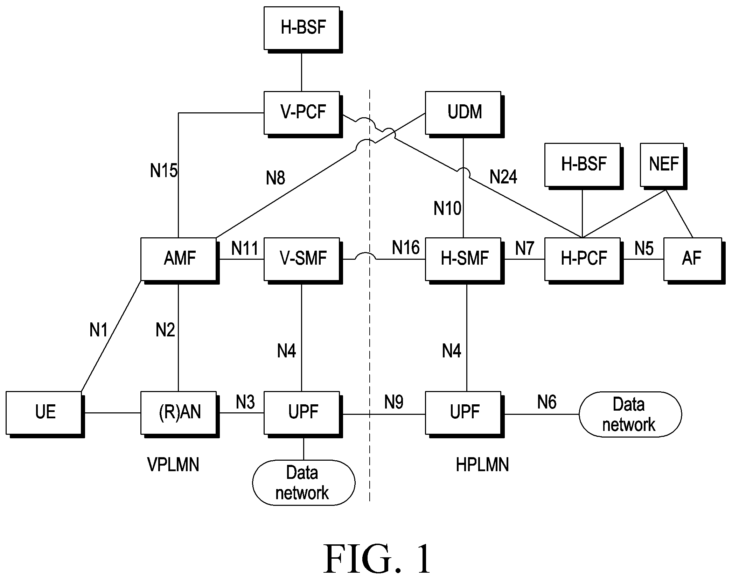

FIG. 1 illustrates the structure of a 5G system according to an embodiment of the disclosure.

A 5G system structure supporting home-routed (HR) roaming according to an embodiment of the disclosure may include various network functions (NFs). FIG. 1 illustrates an access and mobility management function (AMF), a session management function (SMF), a policy control function (PCF), an application function (AF), a unified data management (UDM), a data network (DN), a network exposure function, a binding support function (BSF), a user plane function (UPF), a (radio) access network ((R)AN), and a user equipment (UE) among various network functions.

Each NF supports the following functions.
- The AMF provides functions for UE-based access and mobility management and each UE may be basically connected to one AMF. A visited (V)-AMF refers to the AMF of the visited network based on the UE subscriber. A home (H)-AMF refers to the AMF of the home network of the UE subscriber.
- The DN refers to, for example, operator services, Internet access, or 3rd party services. The DN may transmit a downlink protocol data unit (PDU) to the UPF or receive, from the UPF, a PDU transmitted from the UE.
- The PCF receives information about the packet flow from the application function and provides a function of determining policies such as mobility management and session management. Specifically, the PCF may support functions such as supporting a unified policy framework to control network operations, providing policy rules so that control plane function(s) (e.g., AMF, SMF, and the like) may enforce policy rules, implementing front-end to access relevant subscription information for policy decisions in user data repository (UDR), and the like.
- The SMF provides a session management function, and when the UE has multiple sessions, each session may be managed by different SMFs. The visited (V)-SMF refers to the SMF of the visited network based on the UE subscriber. The home (H)-SMF refers to the SMF of the home network of the UE subscriber.
- The UDM may store subscription data, policy data, and the like of the user.
- The UPF may deliver the downlink PDU received from the DN to the UE through the (R)AN, and may deliver the uplink PDU received from the UE to the DN through the (R)AN.
- The AF may interact with a 3GPP core network to provide services (for example, supporting functions such as application impact on traffic routing, access network capability exposure, interaction with policy frameworks for policy control, and the like).
- The BSF stores and manages binding information by combining or associating the UE identifier and session information (a UE IP address, a data network name (DNN) associated with a corresponding session, and single-network slice selection assistance information (S-NSSAI)) with the PCF information through which the corresponding UE-related service is provided.

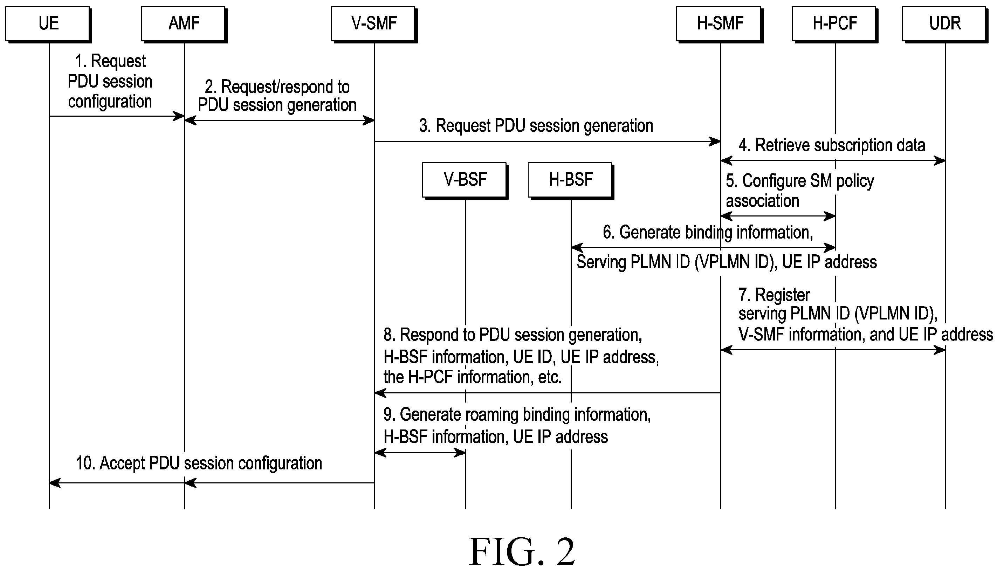

FIG. 2 illustrates a method of generating binding information about a home-routed roaming UE according to an embodiment of the disclosure. Hereinafter, the process for generating binding information shown in FIG. 2 will be described.
1. The UE transmits a PDU session establishment request message to the AMF. The PDU session creation request message may include a binding information generation indicator together with at least one of information about a PDU session identifier, a UE identifier, DNN, and S-NSSAI. The binding information generation indicator may be included and provided within a protocol configuration option. In addition, the binding information generation indicator may be provided together with specific application identifier information. Binding information may be interpreted as information for associating a UE with a PDU session. For example, the binding information may include information for identifying the UE (e.g., the identifier of the UE) and information related to the PDU session associated with the UE (e.g., address assigned to the UE associated with the PDU session, information indicating the PLMN associated with the PDU session, and information indicating each of the one or more NFs managing the PDU session).
2. The AMF transmits a PDU session creation message including the information received from the UE in operation 1 to the V-SMF. The corresponding PDU session creation message may include at least one of a PDU session identifier, a UE identifier, DNN, S-NSSAI, and a binding information generation indicator. Before performing operation 2, the AMF may select whether to deliver a binding information generation indicator to the V-SMF based on the subscriber information received from the UDM.
3. The V-SMF transmits a PDU session creation request message to the H-SMF. The PDU session creation request message may include information about at least one of a PDU session identifier, a UE identifier, a visited PLMN identifier, binding information generation indicator, DNN, and S-NSSAI. When information about the V-PCF is given to the V-SMF (for example, when an association procedure for UE policy, AM policy, SM policy, etc. between the V-SMF and the V-PCF has been performed), the V-SMF may provide information about the V-PCF (such as the identifier of the V-PCF and information about the address) together with the information described above to the H-SMF through the PDU session creation request message.
4. The H-SMF may obtain UE subscriber information from the UDM. The UE subscriber information provided by the UDM may include whether to allow the generation of binding information about a roaming UE and/or whether to share the binding information with the VPLMN. In addition, the H-SMF may obtain a UE identifier from the UDM in addition to UE subscriber information. For example, the H-SMF may provide, to the UDM, at least one of a PDU session identifier, a DNN, S-NSSAI, or application identifier associated with a PDU session, and an identifier of a PLMN (visited PLMN) which the UE is accessing, and may receive, from the UDM, a UE identifier mapped to the corresponding information. The corresponding identifier may be in the form of a corresponding PDU session or a DNN corresponding to the PDU session, S-NSSAI information, an application identifier, and an application- or PLMN-specific (or limited) UE identifier (AF and PLMN specific UE ID) corresponding to the visited PLMN. These application-specific, PLMN-specific, or application- or PLMN-limited UE identifiers correspond to a specific AF identifier, an application identifier, and a visited PLMN identifier (serving PLMN identifier), and may be generated by combining the information of the AF identifier/application identifier/PLMN ID and a code specifying a UE (UUID, or a code obtained by converting a MISISDN of the UE or a SUPI of the UE). In addition, the application-specific or PLMN-specific UE identifier generated as described above may be mapped to a specific DNN and S-NSSAI and stored in the UDM, and may additionally be associated with an application provider identifier and stored. To this end, the UDM may, as described above with respect to a specific UE, generate and store an application service usable by the UE and a different UE identifier according to an identifier of a PLMN which the UE may access (or roam). In addition, the UDM may map application-specific and roaming PLMN-specific UE identifier information to the AF identifier, application identifier, PLMN ID, SUPI or MSISDN, application provider identifier, DNN, and S-NSSAI and store them in the UDR or NEF.
5. The H-SMF performs session management (SM) policy association procedures for the H-PCF and the UE. In this procedure, the H-SMF may provide, to the H-PCF, at least one of the UE identifier (SUPI, GPSI, or application/PLMN-specific identifier, etc.), the PDU session identifier, the DNN, the S-NSSAI information, the binding information generation indicator, and the identifier of a visited PLMN to which the V-SMF belongs (or the identifier of a serving PLMN which the UE is currently roaming), and may receive policy information for the corresponding session from the H-PCF.
6. After successfully performing or completing the SM policy association, the H-PCF may transmit, to the H-BSF, a message for registering binding information about the corresponding UE. According to an embodiment, the H-PCF may generate binding information and transmit the binding information registration message including the generated binding information to the H-BSF. For example, the H-PCF may provide, to the H-BSF through the message, binding information including at least one of the visited PLMN identifier (or serving PLMN identifier), the UE identifier (SUPI, GPSI, or application/PLMN-specific identifier, etc.), DNN, S-NSSAI, PDU session identifier, IP address assigned to the UE (IPv4 address or IPv6 prefix, etc.), a binding information generation and sharing indicator (which may indicate that a binding regarding a roaming UE is generated), and the H-PCF identifier and address information. The H-BSF stores and manages the binding information by combining or associating the information received from the H-PCF, through the corresponding binding information registration or generation request message. After the binding information is stored, the H-BSF may register, in the UDM, binding information including at least one of the H-BSF address information and identifier, the UE identifier (SUPI, GPSI, or application/PLMN-specific identifier, etc.), the PDU session identifier, UE address information, and the visited PLMN identifier. After successfully registering the binding information for the UE, the H-PCF may provide the H-BSF information (address and identifier, etc.) to the H-SMF. In addition, the H-PCF may register the binding information including at least one of H-PCF information, the H-BSF information, and the UE identifier and address information in the UDM. In addition, the H-PCF may store the above binding information in the NEF or UDR, which is responsible for providing network services/functions to applications mapped to the DNN and S-NSSAI corresponding to the session. According to an embodiment, when the H-PCF is not used, procedure 5 is not performed, and procedure 6 may be performed directly on the H-BSF by the H-SMF, not the H-PCF. In addition, the H-SMF may store the generated binding information directly in the NEF, which is responsible for providing network services/functions for applications mapped to the DNN and S-NSSAI corresponding to the session, or may store the binding information in the UDR.
7. After successfully registering the SM policy association and binding information, the H-SMF registers the H-SMF information for the corresponding UE in the UDM. Here, the H-SMF may register, in the UDM, together with the H-SMF identifier and address information, the UE identifier (SUPI, GPSI, or application/PLMN-specific identifier, etc.), the DNN, the S-NSSAI, the PDU session identifier, the visited PLMN identifier, the UE IP address information, the H-PCF information, and information about the H-BSF in which binding information of the corresponding UE is registered.
8. The H-SMF may transmit a response message regarding the PDU session creation message to the V-SMF. The corresponding message may include information indicating whether the PDU session creation was successful, the UE identifier (SUPI, GPSI, or application/PLMN-specific identifier, etc.), the PDU session identifier, the visited PLMN identifier, UE IP address information, the H-PCF information, and information about the H-BSF in which binding information of the corresponding UE is registered.
9. The V-SMF may combine the UE information received from the H-SMF with the UE-related H-PCF and H-BSF information and request the V-BSF to generate binding information. The V-BSF may store and manage at least one of the UE identifier (SUPI, GPSI, or application/PLMN-specific identifier, etc.) for the corresponding UE, DNN, S-NSSAI, PDU session identifier, IP address assigned to the UE (IPv4 address or IPv6 prefix, etc.), a binding generation and sharing indicator (which may indicate that a binding regarding a roaming UE is generated), and an H-PCF identifier.
10. The V-SMF transmits a PDU session creation accept message to the UE through the AMF. The message may include a PDU session identifier, a UE identifier (SUPI or GPSI, or an application/PLMN specific identifier, etc.).

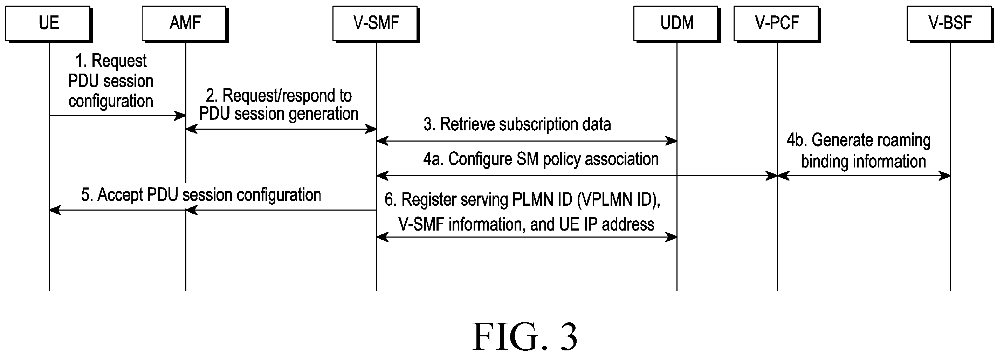

FIG. 3 illustrates a method for generating binding information about a local breakout (LBO) roaming UE according to an embodiment of the disclosure. Hereinafter, the process for generating binding information shown in FIG. 3 will be described.
1. The UE transmits a PDU session creation request message to the AMF. The PDU session creation request message may include a binding information generation indicator together with at least one of the PDU session identifier, UE identifier, home PLMN identifier, DNN, and S-NSSAI information. The binding information generation indicator may be included and provided within the protocol configuration option. In addition, the binding information generation indicator may be provided together with specific application identifier information.
2. The AMF transmits a PDU session creation message including the information received from the UE in operation 1 to the V-SMF. The PDU session creation message may include at least one of a PDU session identifier, home PLMN identifier, UE identifier, DNN, S-NSSAI, and binding information generation indicator. Before performing operation 2, the AMF may select whether to deliver a binding information generation indicator to the V-SMF, based on the subscriber information received from the UDM.
3. The V-SMF obtains UE subscriber information from the UDM. The UE subscriber information provided by UDM may include whether to allow generation of binding information about a roaming UE or whether to share it with the VPLMN. Additionally, the V-SMF may obtain a UE identifier from the UDM in addition to UE subscriber information from the UDM. For example, the V-SMF may provide, to the UDM, at least one of a PDU session identifier, a DNN, S-NSSAI, or application identifier associated with a PDU session, and an identifier of a PLMN (visited PLMN) which the UE is accessing, and may receive, from the UDM, a UE identifier mapped to the corresponding information. The corresponding identifier may be in the form of a corresponding PDU session or a DNN corresponding to the PDU session, S-NSSAI information, an application identifier, and an application- or PLMN-specific (or limited) UE identifier (AF and PLMN specific UE ID) corresponding to the visited PLMN. These application-specific, PLMN-specific, or application- or PLMN-limited UE identifiers correspond to a specific AF identifier, an application identifier, and a visited PLMN identifier (serving PLMN identifier), and may be generated by combining the information of the AF identifier/application identifier/PLMN ID and a code specifying a UE (UUID, or a code obtained by converting a MISISDN of the UE or a SUPI of the UE). In addition, the application-specific or PLMN-specific UE identifier generated as described above may be mapped to a specific DNN and S-NSSAI and stored in the UDM, and may additionally be associated with an application provider identifier and stored. To this end, the UDM may, as described above with respect to a specific UE, generate and store an application service usable by the UE and a different UE identifier according to an identifier of each PLMN which the UE may access (or roam). In addition, the UDM may map application-specific and roaming PLMN-specific UE identifier information to the AF identifier, application identifier, PLMN ID, SUPI or MSISDN, application provider identifier, DNN, and S-NSSAI and store them in the UDR or NEF. The application-specific or PLMN-specific UE identifier referred to in the disclosure, unlike the existing SUPI type UE identifier, may imply an identifier, the value of which may differ depending on a PLMN to which the UE is connected or an application.
4a. The V-SMF performs SM policy association procedures for the V-PCF and the UE. In this procedure, the V-SMF may provide, to the V-PCF, at least one of the UE identifier (SUPI, GPSI, or application/PLMN-specific identifier, etc.), the PDU session identifier, the DNN, the S-NSSAI information, the binding information generation indicator, and the identifier of a visited PLMN to which the V-SMF belongs (or the identifier of a serving PLMN which the UE is currently roaming), and may receive policy information for the corresponding session from the V-PCF.
4b. After successfully performing or completing the SM policy association, the V-PCF may register binding information about the corresponding UE in the V-BSF. For example, the V-PCF may provide, to the V-BSF, at least one of the home PLMN identifier, the visited PLMN identifier (or serving PLMN identifier), the UE identifier (SUPI, GPSI, or application/PLMN-specific identifier, etc.), DNN, S-NSSAI, PDU session identifier, IP address assigned to the UE (IPv4 address or IPv6 prefix, etc.), a binding information generation and sharing indicator (which may indicate that a binding regarding a roaming UE is generated), and the V-PCF identifier and address information. The V-BSF stores and manages the binding information by combining or associating the information received from the V-PCF, through the corresponding binding information registration or generation request message. After the binding information is generated and stored, the V-BSF may register, in the UDM, together with the binding information, at least one of the V-BSF address information and identifier, the UE identifier (SUPI, GPSI, or application/PLMN-specific identifier, etc.), the PDU session identifier, the UE address information, and the visited PLMN identifier. After successfully registering the binding information for the UE, the V-PCF may provide the V-BSF information (address and identifier, etc.) to the V-SMF. In addition, the V-PCF may register V-PCF information, V-BSF information, and UE identifier and address information in the UDM. In addition, the V-PCF may store the above binding information in the V-NEF or UDR, which is responsible for providing network services/functions to applications mapped to the DNN and S-NSSAI corresponding to the session. According to an embodiment, when the V-PCF is not used, procedure 5 is not performed, procedure 6 may be performed directly on the V-BSF by the V-SMF, not the V-PCF, and the V-PCF information may not be registered in the UDM. When the V-SMF registers the binding information for a roaming UE directly in the V-BSF, the V-SMF may also store the binding information for a roaming UE in the NEF that is responsible for providing network services/functions to the application mapped to the DNN and S-NSSAI corresponding to the session, or store the binding information in the UDR.
5. The V-SMF transmits a PDU session creation accept message to the UE through the AMF. The message may include a PDU session identifier and a UE identifier (SUPI, GPSI, or application/PLMN-specific identifier, etc.).
6. After successfully registering SM policy association and binding information, the V-SMF registers the V-SMF information for the corresponding UE in the UDM. Here, the V-SMF may register, in the UDM, together with the V-SMF identifier and address information, the UE identifier (SUPI, GPSI, or application/PLMN-specific identifier, etc.), the DNN, the S-NSSAI, the PDU session identifier, the visited PLMN identifier, the UE IP address information, the V-PCF information, and information about the V-BSF in which binding information of the corresponding UE is registered. Additionally, the V-SMF may register application identifier information mapped to the corresponding PDU session in the UDM by associating the application identifier information with the above information.

According to the description of the embodiment with reference to FIG. 2 or 3, the V-BSF or H-BSF may process a request for the UE identifier received through the NEF in the future, based on the registered roaming binding information (home PLMN identifier, visited PLMN identifier, UE identifier (SUPI, GPSI, or application/PLMN-specific identifier, etc.), DNN, S-NSSAI, PDU session identifier, IP address assigned to the UE (IPv4 address or IPv6 prefix, etc.), and V-PCF identifier and address information). For example, when the AF requests the identifier information of a roaming UE while providing the IP address information of the UE through the NEF, the NEF may transmit a request for the identifier of the roaming UE to the BSF while providing the IP address of the roaming UE to the BSF, and the BSF may provide the UE identifier to the NEF in response to the request. The NEF may request an application-specific or visited PLMN-specific UE identifier for the roaming UE while providing, to the UDM, the UE identifier received from the BSF and the application identifier, AF identifier, DNN/S-NSSAI information, and visited PLMN identifier received from the AF. In response thereto, the UDM may provide the NEF with a UE identifier that is used only for the application providing a service to the roaming UE (or an AF connected to an application providing a service to the UE) and the roaming PLMN.

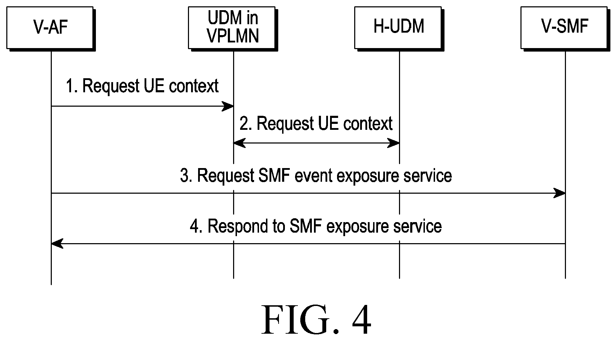

FIG. 4 illustrates a method of obtaining session information for a roaming UE according to an embodiment of the disclosure. Hereinafter, the process for obtaining session information shown in FIG. 4 will be described.
1. In order to obtain PDU session information for a specific UE, a V-AF (AF located in a visited PLMN) may transmit a UE context information request to a UDM in the visited PLMN. The corresponding request message may include an AF identifier, DNN and S-NSSAI, UE identifier information (SUPI, GPSI, or application/PLMN-specific identifier, etc.), and NF type information for requesting serving SMF information configured by an SMF. The request message may further include HPLMN identifier information.
2. The UDM in the visited PLMN may not be able to find context information of a UE. The UDM in the visited PLMN may discover and select a UDM (UDM in the HPLMN (H-UDM)) storing UE subscriber information, based on the UE identifier information and the HPLMN identifier information stored in the visited PLMN or the HPLMN identifier information provided by the V-AF, and may transmit a UE context information request including the information received in procedure 1 and the visited PLMN identifier to the H-UDM. The H-UDM may provide, to the UDM in the visited PLMN, the context information of a UE including at least one of V-SMF information (V-SMF identifier and address information) and UE identifier (SUPI, GPSI, or application/PLMN-specific identifier, etc.) that manage the PDU session for the UE stored through the procedure of FIG. 2 or FIG. 3, a PDU session identifier, and the identifiers and address information of the PCF and BSF responsible for the corresponding UE service. The UDM in the visited PLMN may transmit the context information of a UE received from the H-UDM to the V-AF.
3. The V-AF requests UE address information from the V-SMF by using the obtained V-SMF information and UE identifier information. The request message may include UE identifier information (SUPI, GPSI, or application/PLMN-specific identifier, etc.) and PDU session identifier information.
4. The V-SMF sends, as a reply, the IP address information (IPv4 address or IPv6 Prefix, etc.) for the UE corresponding to the information received from the V-AF. The V-AF may store the obtained UE IP address information and the UE identifier information in association with each other, and may also store and manage the application information collected in relation to the UE in association with the obtained UE IP address information and UE identifier information. Through such associative storing, it is possible to specify application information of a specific UE in response to a request to provide UE-related information including a UE identifier received from another NF such as the NWDAF, and to respond to the request.

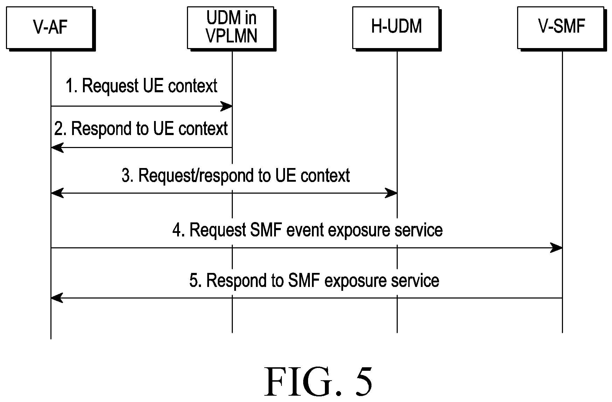

FIG. 5 illustrates a method of obtaining session information for a roaming UE according to an embodiment of the disclosure. Hereinafter, the process for obtaining session information shown in FIG. 5 will be described.
1. In order to obtain session information for a specific UE, a V-AF (AF located in a visited PLMN) may transmit a UE context information request to a UDM in the visited PLMN. The corresponding request message may include an AF identifier, DNN and S-NSSAI, UE identifier information (SUPI, GPSI, or application/PLMN-specific identifier, etc.), and NF type information for requesting serving SMF information configured by an SMF. The request message may further include HPLMN identifier information.
2. The UDM in the visited PLMN may not be able to find context information of the UE. The UDM in the visited PLMN may discover and select a UDM (UDM in the HPLMN (H-UDM)) storing UE subscriber information, based on the UE identifier information and the HPLMN identifier information stored in the visited PLMN or the HPLMN identifier information provided by the V-AF, and may transmit information about the H-UDM to the V-AF.
3. The V-AF may transmit a session information request message for a specific UE to the H-UDM by using the obtained H-UDM information. The request message may include the AF identifier, DNN and S-NSSAI, visited PLMN identifier, UE identifier information (SUPI, GPSI, or application/PLMN-specific identifier, etc.), and NF type information for requesting serving SMF information configured by the SMF. The H-UDM may perform the following operations based on the information received from the V-AF. The H-UDM may provide, to the V-AF, context information of a UE including at least one of the V-SMF information (V-SMF identifier and address information) and the UE identifier (SUPI, GPSI, or application/PLMN-specific identifier, etc.) that manage the PDU session for the UE stored through the procedure of FIG. 2 or FIG. 3, the PDU session identifier, and the identifiers and address information of the PCF and BSF responsible for the corresponding UE service. In case that the SMF managing the PDU session for the corresponding UE is the H-SMF, the UDM may provide the V-AF with the identifier and address information for the H-SMF, together with the context information of the UE, including at least one of the UE identifier (SUPI, GPSI, or application/PLMN-specific identifier, etc.), the PDU session identifier, and the identifiers and address information of the PCF and BSF responsible for the corresponding UE service.
4. The V-AF requests the UE address information from the V-SMF by using the obtained V-SMF information and UE identifier information. The corresponding request message may include UE identifier information (SUPI, GPSI, or application/PLMN-specific identifier, etc.) and PDU session identifier information. In case that information about the H-SMF is received in the previous operation, the V-AF may perform the above request with respect to the H-SMF.
5. The V-SMF sends, as a reply, IP address information (IPv4 address or IPv6 Prefix, etc.) for the UE corresponding to the information received from the V-AF. In case that the preceding procedure has been performed for the H-SMF, the H-SMF may provide the IP address information for the UE to the V-AF. The V-AF stores the obtained UE IP address information and UE identifier information in association with each other, and may also store and manage the application information collected for the UE in association with the obtained UE IP address information and UE identifier information. Through such associative storing, it is possible to specify application information of a specific UE in response to a request to provide UE-related information including a UE identifier received from another NF such as the NWDAF, and to respond to the request.

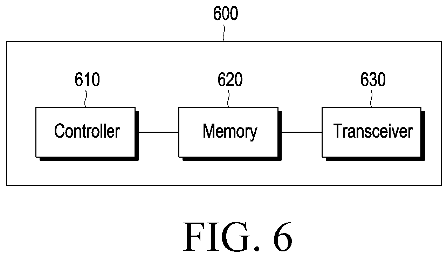

FIG. 6 illustrates a block diagram of an electronic device according to an embodiment of the disclosure.

An electronic device 600 may implement one of predetermined entities described in the disclosure. For example, the electronic device 600 may implement one of the illustrated UE and a plurality of NFs described through FIGS. 1 to 5, 6, and 7. The Electronic device 600 may include a controller 610, memory 620, and a transceiver 630.

The controller 610 may be connected to other elements (e.g., memory 602 and transceiver 630) in the electronic device 600 to control the operations of the other elements. The controller 610 may control itself and other elements of the electronic device 600 to cause the electronic device 600 to perform at least one operation. The operation of the electronic device 600 may be interpreted as being substantially executed by the controller 610. The controller 610 may be implemented through at least one processor.

The memory 620 may be referred to as a "non-transitory computer-readable storage medium" to distinguish it from a medium for transmission of information. The memory 620 may be implemented through at least one of random access memory (RAM), read-only memory (ROM), a hard disk, a CD-ROM, and a solid state drive (SSD), but is not necessarily limited thereto and may be implemented by any possible type of storage medium capable of storing and reading information. The memory 620 may store instructions that are executable by the controller 610. When the instructions are executed by the controller 610, the controller 610 (or the electronic device 600) may perform at least one of the operations of the electronic device 600 described in this disclosure. The memory 620 may further store temporary or permanent data necessary for the operation of the controller 610.

The transceiver 630 may include a circuit (i.e., a communication circuit) necessary for communication. The electronic device 600 may communicate with other devices through the transceiver 630. The transceiver 630 may support at least one of various wireless access technologies, such as, but not necessarily limited to, long-term evolution (LTE), LTE-Advanced (LTE-A), code division multiple access (CDMA), orthogonal frequency division multiplexing (OFDM), Bluetooth, etc. The transceiver 630 may provide communication functions for the electronic device 600 by using any known wireless access technology.

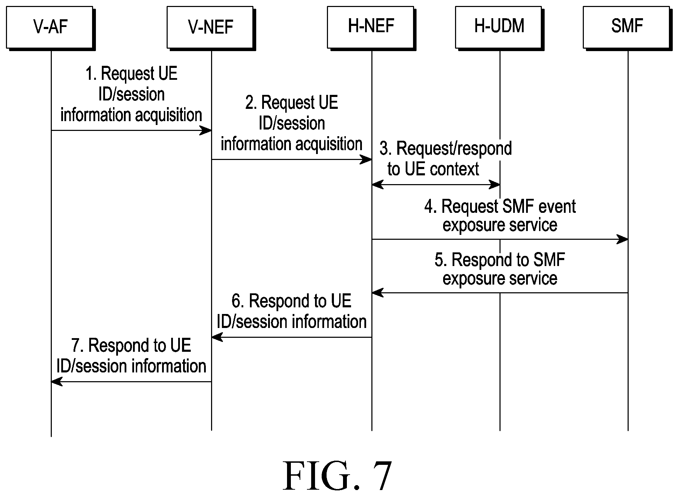

FIG. 7 illustrates a method of obtaining session information for a roaming UE according to an embodiment of the disclosure. Hereinafter, the process for obtaining session information shown in FIG. 7 will be described.
1. In order to obtain session information for a specific UE, a V-AF (AF located in a visited PLMN) may transmit a UE ID/session information request to a network exposure function (NEF) in the visited PLMN. The corresponding request message may include at least one of an AF identifier, DNN and S-NSSAI, UE identifier information (SUPI, GPSI, or application/PLMN-specific identifier, etc.), a UE session information request indicator, and NF type information for requesting serving SMF information configured by an SMF. The request message may also include HPLMN identifier information and a VPLMN identifier.
2. The NEF in the visited PLMN may identify the HPLMN identifier of the roaming UE and transmit the UE ID/session information request to the NEF of the HPLMN. The request message may include the information received from the V-AF in procedure 1.
3. The H-NEF may request SMF information for managing a session of the UE while transmitting the AF identifier, DNN and S-NSSAI, UE identifier information, and NF type information configured by the SMF, which are included in the UE ID/session information request message received from the V-NEF, to the H-UDM. The H-UDM may provide, to the H-NEF, context information of the UE including at least one of the SMF information (SMF identifier and address information, PLMN identifier) and UE identifier (SUPI, GPSI, or application/PLMN-specific identifier, etc.) that manage the PDU session for the UE stored based on the information received from the H-NEF, the PDU session identifier, and the identifiers and address information of the PCF and BSF responsible for the corresponding UE service.
4. The H-NEF requests UE address information from the SMF by using the obtained SMF information and UE identifier information. The corresponding request message may include UE identifier information (SUPI, GPSI, or application/PLMN-specific identifier, etc.) and PDU session identifier information. In this operation, when the H-NEF receives information about the SMF deployed in the HPLMN from the H-UDM, the H-NEF may directly request the UE address information from the H-SMF. In case that the SMF provided by the H-UDM in procedure 3 is an SMF (V-SMF) deployed in VPLMN, the H-NEF may provide V-SMF information to the V-NEF, and induce the V-NEF to perform the operation of requesting the UE address information from the V-SMF.
5. The SMF sends, as a reply, the UE IP address information (IPv4 address or IPv6 Prefix, etc.) corresponding to the information received from the H-NEF.
6. The H-NEF transmits the obtained UE IP address information (IPv4 address or IPv6 Prefix, etc.) to the V-NEF.
7. The V-NEF may, in response to procedure 1, provide the UE IP address information (IPv4 address or IPv6 Prefix, etc.) mapped to the UE identifier information (SUPI, GPSI, or application/PLMN-specific identifier, etc.) to the V-AF. The V-AF may store the obtained UE IP address information and UE identifier information in association with each other, and may also store and manage application information collected for the UE in association with the obtained UE IP address information and UE identifier information. Through such associative storing, it is possible to specify application information of a specific UE in response to a request to provide UE-related information including a UE identifier received from another NF such as the NWDAF, and to respond to the request.

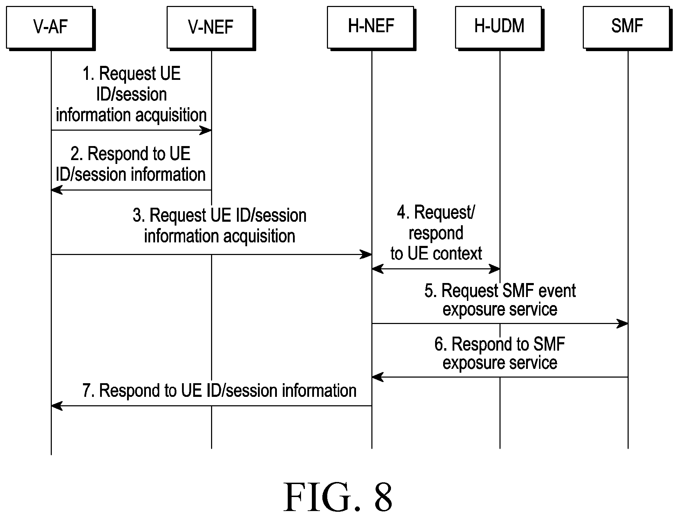

FIG. 8 illustrates a method of obtaining session information for a roaming UE according to an embodiment of the disclosure. Hereinafter, the process for obtaining session information shown in FIG. 8 will be described.
1. In order to obtain session information for a specific UE, a V-AF (AF located in a visited PLMN) may transmit a UE ID/session information request to an NEF in the visited PLMN. The corresponding request message may include at least one of an AF identifier, DNN and S-NSSAI, UE identifier information (SUPI, GPSI, or application/PLMN-specific identifier, etc.), a UE session information request indicator, and NF type information for requesting serving SMF information configured by an SMF. The request message may also include HPLMN identifier information and a VPLMN identifier.
2. The NEF in the visited PLMN may identify the HPLMN identifier of the roaming UE and transmit the H-NEF address and identifier information of the HPLMN to the V-AF.
3. The V-AF may transmit a UE ID/session information request to the obtained H-NEF. The corresponding request message may include at least one of an AF identifier, DNN and S-NSSAI, UE identifier information (SUPI, GPSI, or application/PLMN-specific identifier, etc.), a UE session information request indicator, and NF type information for requesting serving SMF information configured by an SMF.
4. The H-NEF may request SMF information for managing a session of the UE while transmitting the AF identifier, DNN and S-NSSAI, UE identifier information, and NF type information configured by the SMF, which are included in the ID/session information request message received from the V-NEF, to the H-UDM. The H-UDM may provide, to the H-NEF, context information of the UE including at least one of the SMF information (SMF identifier and address information, PLMN identifier) and UE identifier (SUPI, GPSI, or application/PLMN-specific identifier, etc.) that manage the PDU session for the UE stored based on the information received from the H-NEF, the PDU session identifier, and the identifiers and address information of the PCF and BSF responsible for the corresponding UE service.
5. The H-NEF requests the UE address information from the SMF by using the obtained SMF information and UE identifier information. The corresponding request message may include the AF identifier, DNN and S-NSSAI, UE identifier information (SUPI, GPSI, or application/PLMN-specific identifier, etc.), and PDU session identifier information. In this operation, when the H-NEF receives information about the SMF deployed in the HPLMN from the H-UDM, the H-NEF may directly request the UE address information from the H-SMF. In case that the SMF provided by the H-UDM is an SMF (V-SMF) deployed in the VPLMN, the H-NEF may provide V-SMF information to the V-NEF, and induce the V-NEF to perform the operation of requesting the UE address information from the V-SMF.
6. The SMF sends the UE address information (IPv4 address or IPv6 Prefix, etc.) as a response message to procedure 5 above.
7. The H-NEF transmits the obtained UE IP address information (IPv4 address or IPv6 Prefix, etc.) to the V-AF. The corresponding message may include the UE IP address information (IPv4 address or IPv6 Prefix, etc.) mapped to the UE identifier information (SUPI, GPSI, or application/PLMN-specific identifier, etc.). The V-AF may store the obtained UE IP address information and UE identifier information in association with each other, and may also store and manage application information collected for the UE in association with the obtained UE IP address information and UE identifier information. Through such associative storing, it is possible to specify application information of a specific UE in response to a request to provide UE-related information including a UE identifier received from another NF such as the NWDAF, and to respond to the request.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for managing binding information about a roaming terminal by a home-policy control function (H-PCF) in a wireless communication system, the method comprising:
performing a session management policy association procedure for a terminal with a home-session management function (H-SMF) which received a request to create a protocol data unit (PDU) session for the terminal from a visited-session management function (V-SMF);
generating binding information about the terminal; and
transmitting, to a home binding support function (H-BSF), a message for registering the generated binding information.

2. The method of claim 1, wherein the performing of the session management policy association procedure comprises:
receiving, from the H-SMF, at least one of an identifier of the terminal, an identifier of the PDU session, a data network name (DNN), a single-network slice selection assistance information (S-NSSAI), a binding information generation indicator, and an identifier of a visited public land mobile network (VPLMN) to which the V-SMF belongs; and
transmitting policy information about the PDU session to the H-SMF.

3. The method of claim 1, wherein the message for registering the generated binding information comprises information about at least one of an identifier of a VPLMN, an identifier of the terminal, a DNN, a S-NSSAI, an identifier of the PDU session, an IP address assigned to the terminal, a binding information generation and sharing indicator, an identifier of the H-PCF, and an address of the H-PCF.

4. A method for managing binding information about a roaming terminal by a visited-session management function (V-SMF) in a wireless communication system, the method comprising:
receiving a request to create a PDU session for a terminal from an access and mobility function (AMF);
obtaining subscriber information about the terminal from a unified data management (UDM);
performing a session management policy association procedure for the terminal with a visited-policy control function (V-PCF), the V-PCF registering binding information about the terminal in a visited-binding support function (V-BSF); and
transmitting a PDU session creation accept message to the terminal through the AMF.

5. The method of claim 4, further comprising registering, in association with the terminal, information about the V-SMF in the UDM,
wherein the information about the V-SMF comprises at least one of an identifier of the V-SMF and an address of the V-SMF.

6. The method of claim 5, further comprising registering, in the UDM, at least one of an identifier of the terminal, an identifier of the PDU session, a data network name (DNN), a single-network slice selection assistance information (S-NSSAI), an identifier of a visited public land mobile network (VPLMN), an IP address of the terminal, information about the V-PCF, information about the V-BSF, and application identifier information mapped to the PDU session, together with the information about the V-SMF.

7. The method of claim 4, wherein the request to create the PDU session for the terminal comprises at least one of an identifier of the PDU session, an identifier of a home-public land mobile network (h-PLMN), an identifier of the terminal, a DNN, a S-NSSAI, and a binding information generation indicator.

8. A method for obtaining context of a terminal by a visited-application function (V-AF) in a wireless communication system, the method comprising:
requesting context of the terminal from a unified data management (UDM) in a visited public land mobile network (VPLMN); and
receiving, from the UDM in the VPLMN, the context of the terminal, obtained by the UDM in the VPLMN from a home-UDM (H-UDM).

9. The method of claim 8, further comprising:
transmitting, to the V-SMF, a message requesting information about an address of the terminal, based on information about a visited-session management function (V-SMF) and identifier information of the terminal, obtained from the context information of the terminal; and
receiving information about the address of the terminal from the V-SMF.

10. The method of claim 8, wherein the context information of the terminal comprises at least one of information about a V-SMF managing a protocol data unit (PDU) session for the terminal, an identifier of the terminal, an identifier of the PDU session, and identifiers and addresses of a policy control function (PCF) and a binding support function (BSF) that are responsible for the terminal.

11. A method for obtaining context of a terminal by a visited-application function (V-AF) in a wireless communication system, the method comprising:
requesting context of the terminal from a unified data management (UDM) in a visited public land mobile network (VPLMN);
in response to the requesting, receiving information about a home-unified data management (H-UDM) that stores subscriber information about the terminal from the UDM in the VPLMN;
requesting the context of the terminal to the H-UDM; and
receiving the context of the terminal from the H-UDM.

12. The method of claim 11, further comprising:
based on information about a visited-session management function (V-SMF) and identifier information of the terminal, obtained from context information of the terminal, transmitting a message requesting information about an address of the terminal to the V-SMF; and
receiving information about the address of the terminal from the V-SMF.

13. The method of claim 11, wherein the context information of the terminal comprises information about a V-SMF managing a protocol data unit (PDU) session for the terminal, an identifier of the terminal, an identifier of the PDU session, and identifiers and addresses of a policy control function (PCF) and a binding support function (BSF) that are responsible for the terminal.

14. An electronic device for a home-policy control function (H-PCF) in a wireless communication system, the electronic device comprising:
a transceiver; and
a controller connected to the transceiver,
wherein the controller is configured to operate according to a method of any one of claims 1 to 3.

15. An electronic device for a visited-session management function (V-SMF) in a wireless communication system, the electronic device comprising:
a transceiver; and
a controller connected to the transceiver,
wherein the controller is configured to operate according to a method of any one of claims 4 to 7.

16. An electronic device for a visited-application function (V-AF) in a wireless communication system, the electronic device comprising:
a transceiver; and
a controller connected to the transceiver,
wherein the controller is configured to operate according to a method of any one of claims 8 to claim 10.

17. An electronic device for a visited-application function (V-AF) in a wireless communication system, the electronic device comprising:
a transceiver; and
a controller connected to the transceiver,
wherein the controller is configured to operate according to a method of any one of claims 11 to 13.
